(19) Europäisches Patentamt
European Patent Office
Office européen des brevets

(11) **EP 4 404 402 A1**

(12) **EUROPEAN PATENT APPLICATION**

(43) Date of publication:
24.07.2024 Bulletin 2024/30

(51) International Patent Classification (IPC):
H02B 13/065 (2006.01)   F28D 15/02 (2006.01)
G01K 3/06 (2006.01)   H02G 5/10 (2006.01)
G01K 3/14 (2006.01)

(21) Application number: 23151971.1

(22) Date of filing: 17.01.2023

(52) Cooperative Patent Classification (CPC):
H02G 5/10; F28D 15/0275; F28D 15/06;
G01K 3/14; H02B 13/065

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: ABB SCHWEIZ AG
5400 Baden (CH)

(72) Inventors:
• SOLOGUBENKO, Oleksandr
8906 Bonstetten (CH)
• KESSLER, Michael
42579 Heiligenhaus (DE)
• STADNICKI, Adrian
40883 Ratingen (DE)
• HYRENBACH, Maik
40878 Ratingen (DE)

(74) Representative: Maiwald GmbH
Engineering
Elisenhof
Elisenstrasse 3
80335 München (DE)

(54) **SYSTEM FOR MONITORING A THERMOSYPHON OF A MEDIUM VOLTAGE SWITCHGEAR**

(57)    The present invention relates to a system for monitoring a thermosyphon of a medium voltage switchgear, the thermosyphon comprising an evaporator section (4) an adiabatic section (5) a condenser section (6), wherein the evaporator section is in thermal contact with a conductor (L1, L2, L3, 3) of the switchgear, wherein the adiabatic section links the evaporator section to the condenser section and wherein in use at least some of a working fluid in the thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the system for monitoring the thermosyphon comprises:
- at least one sensor (T1, T2, T3, P1, P2, P3); and
- a processing unit;
wherein the at least one sensor is configured to measure temperature data and/or pressure data of the working fluid;
wherein the at least one sensor is configured to provide the temperature data and/or the pressure data to the processing unit; and
wherein the processing unit is configured to determine that the thermosyphon has a fault based on analysis of the temperature data and/or the pressure data.

Fig. 3

**Description**

FIELD OF THE INVENTION

The present invention relates to a system for monitoring a thermosyphon of a medium voltage switchgear, systems for monitoring three thermosyphons of a medium voltage switchgear, a method for monitoring a thermosyphon of a medium voltage switchgear, methods for monitoring three thermosyphons of a medium voltage switchgear, computer program elements, and computer readable media.

BACKGROUND OF THE INVENTION

Thermosyphon cooling is a very efficient thermal management solution for a switchgear, such as a gas insulated switchgear. A thermosyphon allows to transfer large heat loads by means of circulation of a specially selected dielectric fluid. Three main elements of a thermosyphon are the evaporator, the condenser, and an adiabatic section (normally a tube), forming a pressure-tight volume. The working fluid boils in the evaporator in thermal contact with an electric conductor inside of the enclosure of the switchgear, the vapor moves upwards and condenses in the condenser, normally at ground potential outside of the enclosure, and returns as liquid to the hot conductor by gravity force. Each electric phase of a 3-phase AC switchgear can be equipped with a separate thermosyphon.

The main thermal requirement for the cooling system is that, during a normal operation, each thermosyphon keeps the electric conductor temperature below a prescribed value, and keeps the total temperature rise with respect to the ambient temperature below a prescribed value.

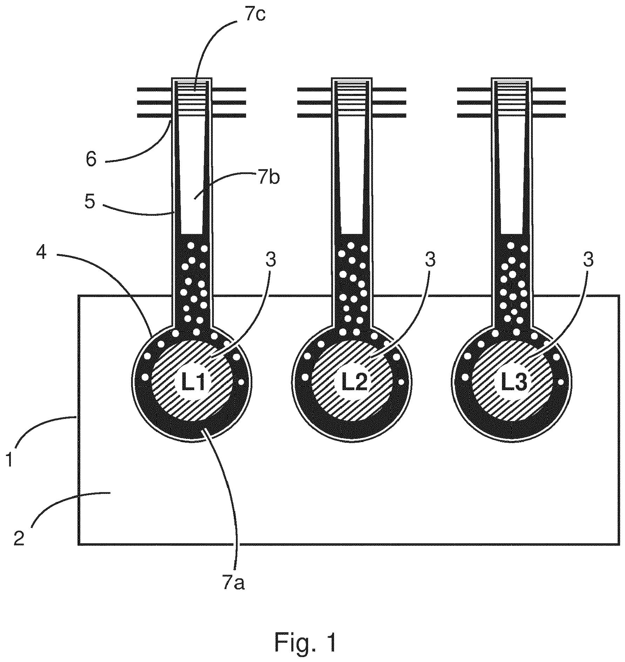

An exemplar gas-insulated enclosure with three thermosyphons is shown schematically in fig. 1 (a cross-section). The enclosure **1** is filled with insulation gas **2** (SF6, AirPlus® or another) and contains a set of three electric conductors **3** (shown in an axial view in Fig. 1). There are three thermosyphons, which cool the conductors, each consisting of ab evaporator section **4,** an adiabatic section **5,** and a condenser section **6.** The working fluid, for example 3M™ Novec 649 Engineered Fluid, has a liquid phase **7a** and a vapor phase **7b;** the vapor phase may be mixed with a fraction of the non-condensable gas **7c,** which normally accumulates at the top of the condenser during operation.

There are several types of failures which can lead to a loss of thermal performance of a thermosyphon. The consequences of different causes often lead to the same failure modes:

- An increase of the fluid pressure due to the non-condensable gas (NCG, mostly air) penetrating the thermosyphon.
- The fluid escaping the thermosyphon slowly from the upper part of the thermosyphon (from the condenser and adiabatic section).
- The fluid escaping the thermosyphon slowly from the lower part of the thermosyphon (from the evaporator).
- Restricted circulation of air around the condenser.
- Increased thermal resistance of boiling or condensation surfaces (fouling).
- A dry-out at higher heat loads due to the counterflow interaction between the liquid and the vapor.

A failure means that, at normal switchgear operation, a thermosyphon fails to keep the hot conductor temperature ($T_h$) below the prescribed value $T_M$, or fails to keep the total temperature rise with respect to the ambient temperature ($\Delta T = T_h - T_{amb}$) below the prescribed value. The normal operation means that the heat flux $Q$ and the ambient temperature $T_{amb}$ do not exceed the pre-defined values. The nominal conditions are defined by corresponding standards; typical values are $T_{amb} \leq$ 40 °C and the maximum temperature rise 65 K, therefore $T_M$ = 105 K. However other values can apply, as would be appreciated by the skilled person.

However, it is difficult to determine if a thermosyphon has developed a fault.

There is a need to address this issue.

SUMMARY OF THE INVENTION

Therefore, it would be advantageous to have an improved technique for determining if a thermosyphon has a fault.

The object of the present invention is solved with the subject matter of the independent claims, wherein further embodiments are incorporated in the dependent claims.

In a first aspect, there is provided a system for monitoring a thermosyphon of a medium voltage switchgear, the thermosyphon comprising an evaporator section an adiabatic section a condenser section. The evaporator section is in thermal contact with a conductor of the switchgear. The adiabatic section links the evaporator section to the condenser section. In use at least some of a working fluid in the thermosyphon is evaporated to a vapor phase in the evaporator section and flows via the adiabatic section to the condenser section and is condensed in the condenser section to a liquid phase and returns via the adiabatic section to the evaporator section. The system for monitoring the thermosyphon comprises:

- at least one sensor; and
- a processing unit.

The at least one sensor is configured to measure temperature data and/or pressure data of the working fluid. The at least one sensor is configured to provide the temperature data and/or the pressure data to the processing unit. The processing unit is configured to determine that the thermosyphon has a fault based on analysis of the temperature data and/or the pressure data.

In an example, the determination that the thermosyphon has a fault comprises a comparison of the temperature data with at least one reference temperature and/or a comparison of the pressure data with at least one reference pressure.

In an example, the determination that the thermosyphon has a fault comprises a determination that the temperature data is different to the at least one reference temperature by a threshold temperature and/or a determination that the pressure data is different to the at least one reference pressure by a threshold pressure.

Thus, if the temperature and/or pressure of the working fluid, whether liquid or vapor, is for example greater than it should be, which could involve it being greater than a threshold of what it should be, an alarm can be signaled that the thermosyphon has a fault. Reference temperature and pressure data can be acquired for a thermosyphon that is known to be operating correctly with no fault, and then data acquired for that thermosyphon or an equivalent thermosyphon can be compared with this reference data to assess if the thermosyphon has a fault.

In a second aspect, there is provided a system for monitoring three thermosyphons of a medium voltage switchgear, each thermosyphon comprising an evaporator section an adiabatic section, and a condenser section. Each evaporator section is in thermal contact with a different one or three conductors of the switchgear. The adiabatic section of each thermosyphon links the evaporator section of each thermosyphon to the condenser section of each thermosyphon. In use at least some of a working fluid in each thermosyphon is evaporated to a vapor phase in the evaporator section and flows via the adiabatic section to the condenser section and is condensed in the condenser section to a liquid phase and returns via the adiabatic section to the evaporator section. The system for monitoring the thermosyphon comprises:

- a plurality of sensors; and
- a processing unit.

At least one first sensor of the plurality sensors is configured to measure first temperature data and/or first pressure data of the working fluid in a first thermosyphon of the three thermosyphons. At least one second sensor of the plurality sensors is configured to measure second temperature data and/or second pressure data of the working fluid in a second thermosyphon of the three thermosyphons. At least one third sensor of the plurality sensors is configured to measure third temperature data and/or third pressure data of the working fluid in a third thermosyphon of the three thermosyphons. The at least one first sensor is configured to provide the first temperature data and/or the first pressure data to the processing unit. The at least one second sensor is configured to provide the second temperature data and/or the second pressure data to the processing unit. The at least one third sensor is configured to provide the third temperature data and/or the third pressure data to the processing unit. The processing unit is configured to determine that the first thermosyphon, the second thermosyphon or the third thermosyphon has a fault based on analysis of the first temperature data and/or the first pressure data and/or the second temperature data and/or the second pressure data and/or the second pressure data and/or the third temperature data and/or the third pressure data.

In an example, the determination that the first thermosyphon has a fault comprises a comparison of the first temperature data with at least one reference temperature and/or a comparison of the first pressure data with at least one reference pressure.

In an example, the determination that the second thermosyphon has a fault comprises a comparison of the second temperature data with at least one reference temperature and/or a comparison of the second pressure data with at least one reference pressure.

In an example, the determination that the third thermosyphon has a fault comprises a comparison of the third temperature data with at least one reference temperature and/or a comparison of the third pressure data with at least one reference pressure.

Thus, if the temperature and/or pressure of the working fluid of any of the thermosyphons, whether liquid or vapor, is for example greater than it should be, which could involve it being greater than a threshold of what it should be, an alarm can be signaled that the thermosyphon has a fault. Reference temperature and pressure data can be acquired for the thermosyphons that are known to be operating correctly with no fault, and then data acquired for these thermosyphon or equivalent thermosyphons can be compared with this reference data to assess if any thermosyphon has a fault.

In an example, the determination that the first thermosyphon has a fault comprises a comparison of the first temperature data with the second temperature data and/or a comparison of the first pressure data with the second pressure data.

In an example, the determination that the first thermosyphon has a fault comprises a comparison of the first temperature data with the third temperature data and/or a comparison of the first pressure data with the third pressure data.

Thus, if the first temperature data and/or pressure data are greater than the second temperature data and/or second pressure data, by for example threshold magnitudes, it can be determined that the determined that the first thermosyphon has a fault. The first temperature data and/or the first pressure data can also be greater than reference values as well as being greater than corresponding values for another thermosyphon that provides a greater confidence that there is a fault in the first thermosyphon. The first temperature data and/or first pressure data can also be greater than the corresponding values for the third thermosyphon as well as for the second thermosyphon that again gives increased confidence that the first thermosyphon has a fault. This is especially the case if the absolute temperature value and/or absolute pressure for the first thermosyphon is/are outside of the expected range values, whilst at the same time the values for the second and third thermosyphons are within the expected ranges.

In an example, the determination that the second thermosyphon has a fault comprises a comparison of the second temperature data with the first temperature data and/or a comparison of the second pressure data with the first pressure data.

In an example, the determination that the second thermosyphon has a fault comprises a comparison of the second temperature data with the third temperature data and/or a comparison of the second pressure data with the third pressure data.

In a third aspect, there is provided a system for monitoring three thermosyphons of a medium voltage switchgear, each thermosyphon comprising an evaporator section an adiabatic section, and a condenser section. Each evaporator section is in thermal contact with a different one or three conductors of the switchgear. The adiabatic section of each thermosyphon links the evaporator section of each thermosyphon to the condenser section of each thermosyphon. In use at least some of a working fluid in each thermosyphon is evaporated to a vapor phase in the evaporator section and flows via the adiabatic section to the condenser section and is condensed in the condenser section to a liquid phase and returns via the adiabatic section to the evaporator section. The system for monitoring the thermosyphon comprises:

- a first differential pressure sensor;
- a second differential pressure sensor; and
- a processing unit.

The first differential pressure sensor is configured to measure first differential pressure data between a pressure of the working fluid in a first thermosyphon of the three thermosyphons and a pressure of the working fluid in a second thermosyphon of the three thermosyphons. The second differential pressure sensor is configured to measure second differential pressure data between the pressure of the working fluid in the second thermosyphon of the three thermosyphons and a pressure of the working fluid in a third thermosyphon of the three thermosyphons. The first differential pressure sensor is configured to provide the first differential pressure data to the processing unit. The second differential pressure sensor is configured to provide the second differential pressure data to the processing unit. The processing unit is configured to determine that the first thermosyphon, the second thermosyphon or the third thermosyphon has a fault based on analysis of the first differential pressure data and the second differential pressure data.

In a fourth aspect, there is provided a switchgear comprising the system of the first aspect, or the system of the second aspect, or the system of the third aspect.

In a fifth aspect, there is provided a method for monitoring a thermosyphon of a medium voltage switchgear, the thermosyphon comprising an evaporator section an adiabatic section, and a condenser section. The evaporator section is in thermal contact with a conductor of the switchgear. The adiabatic section links the evaporator section to the condenser section. In use at least some of a working fluid in the thermosyphon is evaporated to a vapor phase in the evaporator section and flows via the adiabatic section to the condenser section and is condensed in the condenser section to a liquid phase and returns via the adiabatic section to the evaporator section. The method for monitoring the thermosyphon comprises:

measuring with at least one sensor temperature data and/or pressure data of the working fluid; providing the temperature data and/or the pressure data to a processing unit; and determining by the processing unit that the thermosyphon has a fault based on analysis of the temperature data and/or the pressure data.

In a sixth aspect, there is provided a method for monitoring three thermosyphons of a medium voltage switchgear, each thermosyphon comprising an evaporator section, an adiabatic section and a condenser section. Each evaporator section is in thermal contact with a different one of three conductors of the switchgear. The adiabatic section of each thermosyphon links the evaporator section of each thermosyphon to the condenser section of each thermosyphon. In use at least some of a working fluid in each thermosyphon is evaporated to a vapor phase in the evaporator section and flows via the adiabatic section to the condenser section and is condensed in the condenser section to a liquid phase and returns via the adiabatic section to the evaporator section. The method for monitoring the thermosyphon comprises:

measuring by at least one first sensor of a plurality sensors first temperature data and/or first pressure data of the working fluid in a first thermosyphon of the three thermosyphons; measuring by at least one second sensor of the plurality sensors second temperature data and/or second pressure data of the working fluid in a second thermosyphon of the three thermosyphons; measuring by at least one third sensor of the plurality sensors third temperature data and/or third pressure data of the working fluid in a third thermosyphon of the three thermosyphons; providing the first temperature data and/or the first pressure data to a processing unit;

providing the second temperature data and/or the second pressure data to the processing unit;

providing the third temperature data and/or the third pressure data to the processing unit; and

determining by the processing unit is configured to determine that the first thermosyphon, the second thermosyphon or the third thermosyphon has a fault based on analyzing the first temperature data and/or the first pressure data and/or the second temperature data and/or the second pressure data and/or the second pressure data and/or the third temperature data and/or the third pressure data.

In a seventh aspect, there is provided a method for monitoring three thermosyphons of a medium voltage switchgear, each thermosyphon comprising an evaporator section an adiabatic section and a condenser section. Each evaporator section is in thermal contact with a different one or three conductors of the switchgear. The adiabatic section of each thermosyphon links the evaporator section of each thermosyphon to the condenser section of each thermosyphon. In use at least some of a working fluid in each thermosyphon is evaporated to a vapor phase in the evaporator section and flows via the adiabatic section to the condenser section and is condensed in the condenser section to a liquid phase and returns via the adiabatic section to the evaporator section. The method for monitoring the thermosyphon comprises:

measuring by a first differential pressure sensor ($\Delta P12$) first differential pressure data between a pressure of the working fluid in a first thermosyphon of the three thermosyphons and a pressure of the working fluid in a second thermosyphon of the three thermosyphons;

measuring by a second differential pressure sensor ($\Delta P23$) second differential pressure data between the pressure of the working fluid in the second thermosyphon of the three thermosyphons and a pressure of the working fluid in a third thermosyphon of the three thermosyphons

providing the first differential pressure data to a processing unit;

providing the second differential pressure data to the processing unit; and

determining by the processing unit that the first thermosyphon, the second thermosyphon or the third thermosyphon has a fault based on analysis of the first differential pressure data and the second differential pressure data.

In an aspect, there is provided a computer program element for controlling an apparatus according to the first aspect which when executed by a processor is configured to carry out the method of the fifth aspect.

In an aspect, there is provided a computer program element for controlling a system according to the second aspect which when executed by a processor is configured to carry out the method of the sixth aspect.

In an aspect, there is provided a computer program element for controlling a system according to the third aspect which when executed by a processor is configured to carry out the method of the seventh aspect.

Thus, according to aspects, there is provided computer program elements controlling one or more of the systems as previously described which, if the computer program element is executed by a processor, is adapted to perform the method as previously described.

According to another aspect, there is provided computer readable media having stored the computer elements as previously described.

The computer program element can for example be a software program but can also be a FPGA, a PLD or any other appropriate digital means.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic representation of a system of 3 thermosyphons for a gas insulated switchgear enclosure;

Fig. 2 shows a schematic illustration of the temperature-based monitoring principle;

Fig. 3 shows a schematic illustration of the pressure-based monitoring principle;

Fig. 4 shows a schematic illustration of a variation of the pressure-based monitoring principle, using differential manometers;

Fig. 5 shows temperature data, pressure data, temperature difference data and pressure difference data for three thermosyphons in a fault situation when air has penetrated into a thermosyphon;

Fig. 6 shows temperature data, pressure data, temperature difference data and pressure difference data for three thermosyphons in a fault situation when working fluid is leaking from the evaporator of a thermosyphon;

Fig. 7 shows temperature data, pressure data, temperature difference data and pressure difference data for three thermosyphons in a fault situation when working fluid is leaking from the condenser of a thermosyphon;

Fig. 8 shows temperature data, pressure data, temperature difference data and pressure difference data for three thermosyphons in a fault situation when the charging valve of a thermosyphon is open; and

Fig. 9 shows temperature data, pressure data, temperature difference data and pressure difference data for three thermosyphons in a fault situation when a heat sink of a condenser section of a thermosyphon is not functioning correctly.

DETAILED DESCRIPTION OF EMBODIMENTS

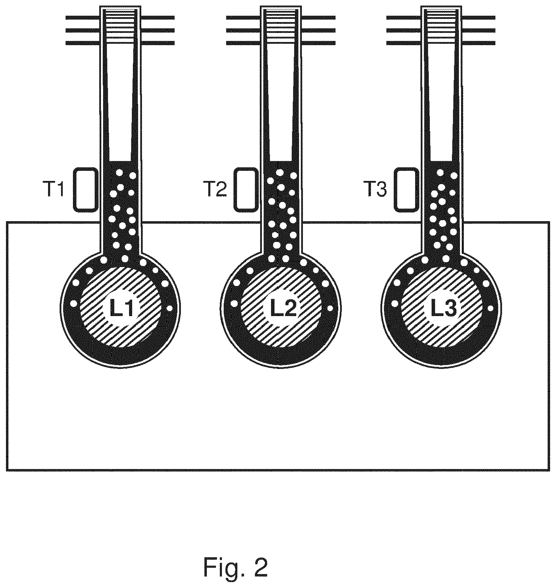

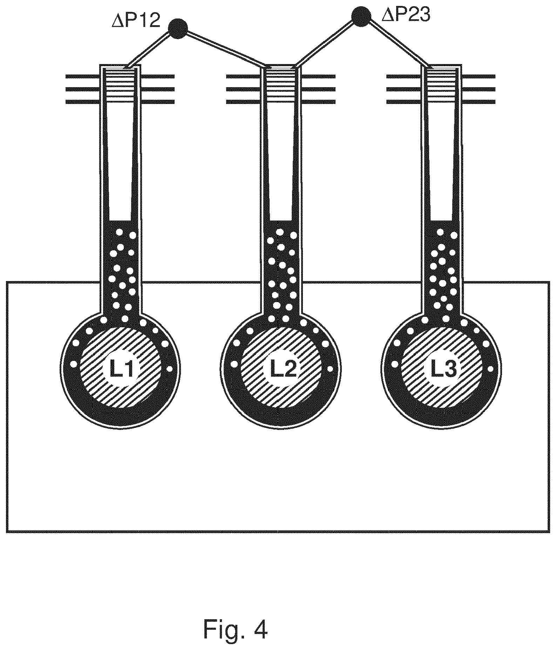

Figs. 2-9 relate to the new system for monitoring a thermosyphon of a medium voltage switchgear, new systems for monitoring three thermosyphons of a medium voltage switchgear, new method for monitoring a thermosyphon of a medium voltage switchgear, and new methods for monitoring three thermosyphons of a medium voltage switchgear.

An example system for monitoring a thermosyphon of a medium voltage switchgear is as follows. The thermosyphon comprises an evaporator section 4 an adiabatic section 5 and a condenser section 6. The evaporator section is in thermal contact with a conductor L1, L2, L3, 3 of the switchgear. The adiabatic section links the evaporator section to the condenser section. In use at least some of a working fluid in the thermosyphon is evaporated to a vapor phase 7b in the evaporator section and flows via the adiabatic section to the condenser section and is condensed in the condenser section to a liquid phase 7a and returns via the adiabatic section to the evaporator section. The system for monitoring the thermosyphon comprises:

- at least one sensor T1, T2, T3, P1, P2, P3; and
- a processing unit.

The at least one sensor is configured to measure temperature data and/or pressure data of the working fluid. The at least one sensor is configured to provide the temperature data and/or the pressure data to the processing unit. The processing unit is configured to determine that the thermosyphon has a fault based on analysis of the temperature data and/or the pressure data.

According to an example, the determination that the thermosyphon has a fault comprises a comparison of the temperature data with at least one reference temperature and/or a comparison of the pressure data with at least one reference pressure.

According to an example, the determination that the thermosyphon has a fault comprises a determination that the temperature data is different to the at least one reference temperature by a threshold temperature and/or a determination that the pressure data is different to the at least one reference pressure by a threshold pressure.

Thus, if the temperature and/or pressure of the working fluid, whether liquid or vapor, is for example greater than it should be, which could involve it being greater than a threshold of what it should be, an alarm can be signalled that the thermosyphon has a fault. Reference temperature and pressure data can be acquired for a thermosyphon that is known to be operating correctly with no fault, and then data acquired for that thermosyphon or an equivalent thermosyphon can be compared with this reference data to assess if the thermosyphon has a fault.

An example system for monitoring three thermosyphons of a medium voltage switchgear is as follows. Each thermosyphon comprising an evaporator section 4 an adiabatic section 5 and a condenser section 6. Each evaporator section is in thermal contact with a different one or three conductors L1, L2, L3, 3 of the switchgear. The adiabatic section of each thermosyphon links the evaporator section of each thermosyphon to the condenser section of each thermosyphon. In use at least some of a working fluid in each thermosyphon is evaporated to a vapor phase 7b in the evaporator section and flows via the adiabatic section to the condenser section and is condensed in the condenser section to a liquid phase 7a and returns via the adiabatic section to the evaporator section. The system for monitoring the three thermosyphons comprises:

- a plurality of sensors T1, T2, T3, P1, P2, P3; and
- a processing unit;

At least one first sensor T1, P1 of the plurality sensors is configured to measure first temperature data and/or first pressure data of the working fluid in a first thermosyphon of the three thermosyphons. At least one second sensor T2, P2 of the plurality sensors is configured to measure second temperature data and/or second pressure data of the working fluid in a second thermosyphon of the three thermosyphons. At least one third sensor T3, P3 of the plurality sensors is configured to measure third temperature data and/or third pressure data of the working fluid in a third thermosyphon of the three thermosyphons. The at least one first sensor is configured to provide the first temperature data and/or the first pressure data to the processing unit. The at least one second sensor is configured to provide the second temperature data and/or the second pressure data to the processing unit. The at least one third sensor is configured to provide the third temperature data and/or the third pressure data to the processing unit. The processing unit is configured to determine that the first thermosyphon, the second thermosyphon or the third thermosyphon has a fault based on analysis of the first temperature data and/or the first pressure data and/or the second temperature data and/or the second pressure data and/or the second pressure data and/or the third temperature data and/or the third pressure data.

In an example, the three conductors L1, L2, L3, 3 of the switchgear are identical.

In an example, each one the three conductors L1, L2, L3, 3 of the switchgear are associated with a different phase of a three phase system.

In an example, the three conductors L1, L2, L3, 3 of the switchgear are anticipated to carry equivalent currents to each other.

In an example, the three conductors L1, L2, L3, 3 of the switchgear are anticipated to have equivalent temperatures to each other if not being cooled or if being cooled by the thermosyphons that do not have faults.

According to an example, the determination that the first thermosyphon has a fault comprises a comparison of the first temperature data with at least one reference temperature and/or a comparison of the first pressure data with at least one reference pressure.

In an example, the determination that the first thermosyphon has a fault comprises a determination that the first temperature data is different to the at least one reference temperature by a threshold temperature and/or a determination that the first pressure data is different to the at least one reference pressure by a threshold pressure

According to an example, the determination that the second thermosyphon has a fault comprises a comparison of the second temperature data with at least one reference temperature and/or a comparison of the second pressure data with at least one reference pressure.

In an example, the determination that the second thermosyphon has a fault comprises a determination that the second temperature data is different to the at least one reference temperature by a threshold temperature and/or a determination that the second pressure data is different to the at least one reference pressure by a threshold pressure

According to an example, the determination that the third thermosyphon has a fault comprises a comparison of the third temperature data with at least one reference temperature and/or a comparison of the third pressure data with at least one reference pressure.

In an example, the determination that the third thermosyphon has a fault comprises a determination that the third temperature data is different to the at least one reference temperature by a threshold temperature and/or a determination that the third pressure data is different to the at least one reference pressure by a threshold pressure.

Thus, if the temperature and/or pressure of the working fluid of any of the thermosyphons, whether liquid or vapor, is for example greater than it should be, which could involve it being greater than a threshold of what it should be, an alarm can be signalled that the thermosyphon has a fault. Reference temperature and pressure data can be acquired for the thermosyphons that are known to be operating correctly with no fault, and then data acquired for these thermosyphon or equivalent thermosyphons can be compared with this reference data to assess if any thermosyphon has a fault.

According to an example, the determination that the first thermosyphon has a fault comprises a comparison of the first temperature data with the second temperature data and/or a comparison of the first pressure data with the second pressure data.

In an example, the determination that the first thermosyphon has a fault comprises a determination that the first temperature data is different to the second temperature by a threshold temperature and/or a determination that the first pressure data is different to the second pressure by a threshold pressure.

According to an example, the determination that the first thermosyphon has a fault comprises a comparison of the first temperature data with the third temperature data and/or a comparison of the first pressure data with the third pressure data.

In an example, the determination that the first thermosyphon has a fault comprises a determination that the first temperature data is different to the third temperature by a threshold temperature and/or a determination that the first pressure data is different to the third pressure by a threshold pressure.

In an example, the determination that the first thermosyphon has a fault comprises a determination that the first temperature data is different to the second temperature by a threshold temperature and/or a determination that the first pressure data is different to the second pressure by a threshold pressure, and a determination that the first temperature data is different to the third temperature by the threshold temperature and/or a determination that the first pressure data is different to the third pressure by the threshold pressure.

In an example, the determination that the first thermosyphon has a fault comprises a determination that the second temperature data is different to the third temperature by an amount less than the threshold temperature and/or a determination that the second pressure data is different to the third pressure by an amount less than the threshold pressure.

Thus, if the first temperature data and/or pressure data are greater than the second temperature data and/or second pressure data, by for example threshold magnitudes, it can be determined that the determined that the first thermosyphon has a fault. The first temperature data and/or the first pressure data can also be greater than reference values as well as being greater than corresponding values for another thermosyphon that provides a greater confidence that there is a fault ibn the first thermosyphon. The first temperature data and/or first pressure data can also be greater than the corresponding values for the third thermosyphon as well as for the second thermosyphon that again gives increased confidence that the first thermosyphon has a fault. This is especially the case if the absolute temperature value and/or absolute pressure for the first thermosyphon is/are outside of the expected range values, whilst at the same time the values for the second and third thermosyphons are within the expected ranges.

According to an example, the determination that the second thermosyphon has a fault comprises a comparison of the second temperature data with the first temperature data and/or a comparison of the second pressure data with the first pressure data.

In an example, the determination that the second thermosyphon has a fault comprises a determination that the second temperature data is different to the first temperature by a threshold temperature and/or a determination that the second pressure data is different to the first pressure by a threshold pressure.

According to an example, the determination that the second thermosyphon has a fault comprises a comparison of the second temperature data with the third temperature data and/or a comparison of the second pressure data with the third pressure data.

In an example, the determination that the second thermosyphon has a fault comprises a determination that the second temperature data is different to the third temperature by a threshold temperature and/or a determination that the second pressure data is different to the third pressure by a threshold pressure.

In an example, the determination that the second thermosyphon has a fault comprises a determination that the second temperature data is different to the first temperature by a threshold temperature and/or a determination that the second pressure data is different to the first pressure by a threshold pressure, and a determination that the second temperature data is different to the third temperature by the threshold temperature and/or a determination that the second pressure data is different to the third pressure by the threshold pressure.

In an example, the determination that the second thermosyphon has a fault comprises a determination that the first temperature data is different to the third temperature by an amount less than the threshold temperature and/or a determination that the first pressure data is different to the third pressure by an amount less than the threshold pressure.

In an example, the determination that the third thermosyphon has a fault comprises a comparison of the third temperature data with the first temperature data and/or a comparison of the third pressure data with the first pressure data.

In an example, the determination that the third thermosyphon has a fault comprises a determination that the third temperature data is different to the first temperature by a threshold temperature and/or a determination that the third pressure data is different to the first pressure by a threshold pressure.

In an example, the determination that the third thermosyphon has a fault comprises a comparison of the third temperature data with the second temperature data and/or a comparison of the third pressure data with the second pressure data.

In an example, the determination that the third thermosyphon has a fault comprises a determination that the third temperature data is different to the second temperature by a threshold temperature and/or a determination that the third pressure data is different to the second pressure by a threshold pressure.

In an example, the determination that the third thermosyphon has a fault comprises a determination that the third temperature data is different to the first temperature by a threshold temperature and/or a determination that the third pressure data is different to the first pressure by a threshold pressure, and a determination that the third temperature data is different to the second temperature by the threshold temperature and/or a determination that the third pressure data is different to the second pressure by the threshold pressure.

In an example, the determination that the third thermosyphon has a fault comprises a determination that the first temperature data is different to the second temperature by an amount less than the threshold temperature and/or a determination that the first pressure data is different to the second pressure by an amount less than the threshold pressure.

An example of a system for monitoring three thermosyphons of a medium voltage switchgear is as follows. Each thermosyphon comprising an evaporator section 4 an adiabatic section 5 and a condenser section 6. Each evaporator section is in thermal contact with a different one or three conductors L1, L2, L3, 3 of the switchgear. The adiabatic section of each thermosyphon links the evaporator section of each thermosyphon to the condenser section of each thermosyphon. In use at least some of a working fluid in each thermosyphon is evaporated to a vapor phase 7b in the evaporator section and flows via the adiabatic section to the condenser section and is condensed in the condenser section to a liquid phase 7a and returns via the adiabatic section to the evaporator section. The system for monitoring the three thermosyphons comprises:

- a first differential pressure sensor ΔP12;
- a second differential pressure sensor ΔP23; and
- a processing unit.

The first differential pressure sensor ΔP12 is configured to measure first differential pressure data between a pressure of the working fluid in a first thermosyphon of the three thermosyphons and a pressure of the working fluid in a second thermosyphon of the three thermosyphons. The second differential pressure sensor ΔP23 is configured to measure second differential pressure data between the pressure of the working fluid in the second thermosyphon of the three thermosyphons and a pressure of the working fluid in a third thermosyphon of the three thermosyphons. The first differential pressure sensor is configured to provide the first differential pressure data to the processing unit. The second differential pressure sensor is configured to provide the second differential pressure data to the processing unit. The processing unit is configured to determine that the first thermosyphon, the second thermosyphon or the third thermosyphon has a fault based on analysis of the first differential pressure data and the second differential pressure data.

In an example, the three conductors L1, L2, L3, 3 of the switchgear are identical.

In an example, each one the three conductors L1, L2, L3, 3 of the switchgear are associated with a different phase of a three phase system.

In an example, the three conductors L1, L2, L3, 3 of the switchgear are anticipated to carry equivalent currents to each other.

In an example, the three conductors L1, L2, L3, 3 of the switchgear are anticipated to have equivalent temperatures to each other if not being cooled or if being cooled by the thermosyphons that do not have faults.

In an example, the processing unit is configured to determine that the first thermosyphon has a fault when the pressure of the working fluid in the first thermosyphon is greater than the pressure of the working fluid in the second thermosyphon by more than a threshold value.

In an example, the processing unit is configured to determine that the first thermosyphon has a fault when the pressure of the working fluid in the second thermosyphon is not greater than the pressure of the working fluid in the third thermosyphon by more than a threshold value.

In an example, the processing unit is configured to determine that the first thermosyphon has a fault when the pressure of the working fluid in the first thermosyphon is greater than the pressure of the working fluid in the second thermosyphon by more than a threshold value, and the pressure of the working fluid in the second thermosyphon is not greater than the pressure of the working fluid in the third thermosyphon by more than the threshold value.

In an example, the processing unit is configured to determine that the third thermosyphon has a fault when the pressure of the working fluid in the third thermosyphon is greater than the pressure of the working fluid in the second thermosyphon by more than a threshold value.

In an example, the processing unit is configured to determine that the third thermosyphon has a fault when the pressure of the working fluid in the second thermosyphon is not greater than the pressure of the working fluid in the first thermosyphon by more than a threshold value.

In an example, the processing unit is configured to determine that the third thermosyphon has a fault when the pressure of the working fluid in the third thermosyphon is greater than the pressure of the working fluid in the second thermosyphon by more than a threshold value, and the pressure of the working fluid in the second thermosyphon is not greater than the pressure of the working fluid in the first thermosyphon by more than a threshold value.

In an example, the processing unit is configured to determine that the second thermosyphon has a fault when the pressure of the working fluid in the second thermosyphon is greater than the pressure of the working fluid in the first thermosyphon by more than a threshold value, and the pressure of the working fluid in the second thermosyphon is greater than the pressure of the working fluid in the third thermosyphon by more than the threshold value.

In an example, the processing unit is configured to determine that the second thermosyphon has a fault when the pressure of the working fluid in the second thermosyphon is greater than the pressure of the working fluid in the first thermosyphon by more than a threshold value, and the pressure of the working fluid in the second thermosyphon is greater than the pressure of the working fluid in the third thermosyphon by more than the threshold value.

In an example, the processing unit is configured to determine that the second thermosyphon has a fault when a magnitude of the differential pressure between the pressure of the working fluid in the second thermosyphon and the pressure of the working fluid in the first thermosyphon is within a threshold value of a magnitude of the differential pressure between the pressure of the working fluid in the second thermosyphon and the pressure of the working fluid in the third thermosyphon.

From the above it is clear that a switchgear can have one of the monitoring systems as described above.

An exemplar method for monitoring a thermosyphon of a medium voltage switchgear is as follows. The thermosyphon comprises an evaporator section 4 an adiabatic section 5 and a condenser section 6. The evaporator section is in thermal contact with a conductor L1, L2, L3, 3 of the switchgear. The adiabatic section links the evaporator section to the condenser section. In use at least some of a working fluid in the thermosyphon is evaporated to a vapor phase 7b in the evaporator section and flows via the adiabatic section to the condenser section and is condensed in the condenser section to a liquid phase 7a and returns via the adiabatic section to the evaporator section. The method for monitoring the thermosyphon comprises:

measuring with at least one sensor T1, T2, T3, P1, P2, P3 temperature data and/or pressure data of the working fluid;
providing the temperature data and/or the pressure data to a processing unit; and
determining by the processing unit that the thermosyphon has a fault based on analysis of the temperature data and/or the pressure data.

In an example, the determining that the thermosyphon has a fault comprises comparing the temperature data with at least one reference temperature and/or comparing the pressure data with at least one reference pressure.

In an example, the determining that the thermosyphon has a fault comprises determining that the temperature data is different to the at least one reference temperature by a threshold temperature and/or determining that the pressure data is different to the at least one reference pressure by a threshold pressure.

An exemplar method for monitoring three thermosyphons of a medium voltage switchgear is as follows. Each thermosyphon comprises an evaporator section 4 an adiabatic section 5 and a condenser section 6. Each evaporator section is in thermal contact with a different one or three conductors L1, L2, L3, 3 of the switchgear. The adiabatic section of each thermosyphon links the evaporator section of each thermosyphon to the condenser section of each thermosyphon. In use at least some of a working fluid in each thermosyphon is evaporated to a vapor phase 7b in the evaporator section and flows via the adiabatic section to the condenser section and is condensed in the condenser section to a liquid phase 7a and returns via the adiabatic section to the evaporator section. The method for monitoring the three thermosyphons comprises:

  measuring by at least one first sensor T1, P1 of a plurality sensors T1, T2, T3, P1, P2, P3 first temperature data and/or first pressure data of the working fluid in a first thermosyphon of the three thermosyphons;
  measuring by at least one second sensor T2, P2 of the plurality sensors second temperature data and/or second pressure data of the working fluid in a second thermosyphon of the three thermosyphons;
  measuring by at least one third sensor T3, P3 of the plurality sensors third temperature data and/or third pressure data of the working fluid in a third thermosyphon of the three thermosyphons;
  providing the first temperature data and/or the first pressure data to a processing unit;
  providing the second temperature data and/or the second pressure data to the processing unit;
  providing the third temperature data and/or the third pressure data to the processing unit; and
  determining by the processing unit is configured to determine that the first thermosyphon, the second thermosyphon or the third thermosyphon has a fault based on analyzing the first temperature data and/or the first pressure data and/or the second temperature data and/or the second pressure data and/or the second pressure data and/or the third temperature data and/or the third pressure data.

In an example, the three conductors L1, L2, L3, 3 of the switchgear are identical.
In an example, each one the three conductors L1, L2, L3, 3 of the switchgear are associated with a different phase of a three phase system.
In an example, the three conductors L1, L2, L3, 3 of the switchgear are anticipated to carry equivalent currents to each other.
In an example, the three conductors L1, L2, L3, 3 of the switchgear are anticipated to have equivalent temperatures to each other if not being cooled or if being cooled by the thermosyphons that do not have faults.

In an example, the determining that the first thermosyphon has a fault comprises comparing the first temperature data with at least one reference temperature and/or comparing the first pressure data with at least one reference pressure.
In an example, the determining that the first thermosyphon has a fault comprises determining that the first temperature data is different to the at least one reference temperature by a threshold temperature and/or determining that the first pressure data is different to the at least one reference pressure by a threshold pressure
In an example, the determining that the second thermosyphon has a fault comprises comparing the second temperature data with at least one reference temperature and/or comparing the second pressure data with at least one reference pressure.
In an example, the determining that the second thermosyphon has a fault comprises determining that the second temperature data is different to the at least one reference temperature by a threshold temperature and/or determining that the second pressure data is different to the at least one reference pressure by a threshold pressure
In an example, the determination that the third thermosyphon has a fault comprises comparing the third temperature data with at least one reference temperature and/or comparing the third pressure data with at least one reference pressure.
In an example, the determining that the third thermosyphon has a fault comprises determining that the third temperature data is different to the at least one reference temperature by a threshold temperature and/or determining that the third pressure data is different to the at least one reference pressure by a threshold pressure.
In an example, the determination that the first thermosyphon has a fault comprises comparing the first temperature data with the second temperature data and/or comparing the first pressure data with the second pressure data.
In an example, the determining that the first thermosyphon has a fault comprises a determining that the first temperature data is different to the second temperature by a threshold temperature and/or determining that the first pressure data is different to the second pressure by a threshold pressure.
In an example, the determining that the first thermosyphon has a fault comprises comparing the first temperature data with the third temperature data and/or comparing the first pressure data with the third pressure data.
In an example, the determining that the first thermosyphon has a fault comprises determining that the first temperature data is different to the third temperature by a threshold temperature and/or determining that the first pressure data is different to the third pressure by a threshold pressure.

In an example, the determining that the second thermosyphon has a fault comprises comparing the second temperature data with the first temperature data and/or comparing the second pressure data with the first pressure data.

In an example, the determining that the second thermosyphon has a fault comprises determining that the second temperature data is different to the first temperature by a threshold temperature and/or determining that the second pressure data is different to the first pressure by a threshold pressure.

In an example, the determining that the second thermosyphon has a fault comprises comparing the second temperature data with the third temperature data and/or comparing the second pressure data with the third pressure data.

In an example, the determining that the second thermosyphon has a fault comprises determining that the second temperature data is different to the third temperature by a threshold temperature and/or determining that the second pressure data is different to the third pressure by a threshold pressure.

In an example, the determining that the third thermosyphon has a fault comprises comparing the third temperature data with the first temperature data and/or comparing the third pressure data with the first pressure data.

In an example, the determining that the third thermosyphon has a fault comprises determining that the third temperature data is different to the first temperature by a threshold temperature and/or determining that the third pressure data is different to the first pressure by a threshold pressure.

In an example, the determination that the third thermosyphon has a fault comprises comparing the third temperature data with the second temperature data and/or comparing the third pressure data with the second pressure data.

In an example, the determining that the third thermosyphon has a fault comprises determining that the third temperature data is different to the second temperature by a threshold temperature and/or determining that the third pressure data is different to the second pressure by a threshold pressure.

An exemplar method for monitoring three thermosyphons of a medium voltage switchgear is as follows. Each thermosyphon comprising an evaporator section 4, an adiabatic section 5 and a condenser section 6. Each evaporator section is in thermal contact with a different one or three conductors L1, L2, L3, 3 of the switchgear. The adiabatic section of each thermosyphon links the evaporator section of each thermosyphon to the condenser section of each thermosyphon. In use at least some of a working fluid in each thermosyphon is evaporated to a vapor phase 7b in the evaporator section and flows via the adiabatic section to the condenser section and is condensed in the condenser section to a liquid phase 7a and returns via the adiabatic section to the evaporator section. The method for monitoring the three thermosyphons comprises:

measuring by a first differential pressure sensor $\Delta$P12 first differential pressure data between a pressure of the working fluid in a first thermosyphon of the three thermosyphons and a pressure of the working fluid in a second thermosyphon of the three thermosyphons;

measuring by a second differential pressure sensor $\Delta$P23 second differential pressure data between the pressure of the working fluid in the second thermosyphon of the three thermosyphons and a pressure of the working fluid in a third thermosyphon of the three thermosyphons

providing the first differential pressure data to a processing unit;

providing the second differential pressure data to the processing unit; and

determining by the processing unit that the first thermosyphon, the second thermosyphon or the third thermosyphon has a fault based on analysis of the first differential pressure data and the second differential pressure data.

In an example, the three conductors L1, L2, L3, 3 of the switchgear are identical.

In an example, each one the three conductors L1, L2, L3, 3 of the switchgear are associated with a different phase of a three phase system.

In an example, the three conductors L1, L2, L3, 3 of the switchgear are anticipated to carry equivalent currents to each other.

In an example, the three conductors L1, L2, L3, 3 of the switchgear are anticipated to have equivalent temperatures to each other if not being cooled or if being cooled by the thermosyphons that do not have faults.

In an example, the method comprises determining by processing unit that the first thermosyphon has a fault when the pressure of the working fluid in the first thermosyphon is greater than the pressure of the working fluid in the second thermosyphon by more than a threshold value.

In an example, the method comprises determining by processing unit that the first thermosyphon has a fault when the pressure of the working fluid in the second thermosyphon is not greater than the pressure of the working fluid in the third thermosyphon by more than a threshold value.

In an example, the method comprises determining by the processing unit that the first thermosyphon has a fault when the pressure of the working fluid in the first thermosyphon is greater than the pressure of the working fluid in the second thermosyphon by more than a threshold value, and the pressure of the working fluid in the second thermosyphon is not greater than the pressure of the working fluid in the third thermosyphon by more than the threshold value.

In an example, the method comprises determining by the processing unit that the third thermosyphon has a fault when the pressure of the working fluid in the third thermosyphon is greater than the pressure of the working fluid in the second thermosyphon by more than a threshold value.

In an example, the method comprises determining by the processing unit that the third thermosyphon has a fault when the pressure of the working fluid in the second thermosyphon is not greater than the pressure of the working fluid in the first thermosyphon by more than a threshold value.

In an example, the method comprises determining by the processing unit that the third thermosyphon has a fault when the pressure of the working fluid in the third thermosyphon is greater than the pressure of the working fluid in the second thermosyphon by more than a threshold value, and the pressure of the working fluid in the second thermosyphon is not greater than the pressure of the working fluid in the first thermosyphon by more than a threshold value.

In an example, the method comprises determining by the processing unit that the second thermosyphon has a fault when the pressure of the working fluid in the second thermosyphon is greater than the pressure of the working fluid in the first thermosyphon by more than a threshold value, and the pressure of the working fluid in the second thermosyphon is greater than the pressure of the working fluid in the third thermosyphon by more than the threshold value.

In an example, the method comprises determining by the processing unit that the second thermosyphon has a fault when the pressure of the working fluid in the second thermosyphon is greater than the pressure of the working fluid in the first thermosyphon by more than a threshold value, and the pressure of the working fluid in the second thermosyphon is greater than the pressure of the working fluid in the third thermosyphon by more than the threshold value.

In an example, the method comprises determining by the processing unit that the second thermosyphon has a fault when a magnitude of the differential pressure between the pressure of the working fluid in the second thermosyphon and the pressure of the working fluid in the first thermosyphon is within a threshold value of a magnitude of the differential pressure between the pressure of the working fluid in the second thermosyphon and the pressure of the working fluid in the third thermosyphon

The new system for monitoring a thermosyphon of a medium voltage switchgear, new systems for monitoring three thermosyphons of a medium voltage switchgear, new method for monitoring a thermosyphon of a medium voltage switchgear, and new methods for monitoring three thermosyphons of a medium voltage switchgear are now described in specific detail where reference is again made to Figs. 2-9.

In effect two different techniques, or thermosyphon monitoring algorithms, have been developed based on the assessment of either temperatures or the pressures of the saturated working fluid in three thermosyphons simultaneously, and evaluating the differences in either temperature or pressure between neighboring thermosyphons. It is to be noted that temperature monitoring can be carried out alone or pressure monitoring can be carried out alone, however both temperature and pressure monitoring can be both be carried out simultaneously. The first condition, which should trigger an alarm, is when the value of either the absolute temperature or the absolute pressure exceeds a limit for any of the three thermosyphons. The second condition, which should trigger an alarm, is when the fluid temperature difference or the fluid pressure difference between any two thermosyphons exceeds a limit. The second condition relies on the fact that it is extremely unlikely that all three thermosyphons develop the same failure simultaneously. Therefore, the fluid saturation temperature of the failed thermosiphon would deviate from the fluid saturation temperatures of normally functioning or less failed thermosyphons.

**Temperature based approach**

A schematic design is shown in Fig. 2. Each thermosyphon is equipped with a temperature sensor T1, T2, T3. The sensors are in good thermal contact with the adiabatic section of the corresponding thermosyphon, but can be applied to the evaporator section or to the condenser section. A protection and control relay (not shown), also termed a processing unit, collects temperature readings and generates an alarm, if one of two criteria is satisfied:

1. The temperature reading from any of the thermometers exceeds a predefined value $T_M$.
2. An absolute value of the temperature difference between any two thermometers $\Delta T_{ij} = T_i - T_j$ ($i,j$ = 1,2,3) exceeds a predefined value $\Delta T_M$.

If the heat loads do not exceed the nominal values, one can use only the differential criteria

$$\Delta T_{ij} \geq \Delta T_M$$

for the temperature-based monitoring.

**Pressure based approach**

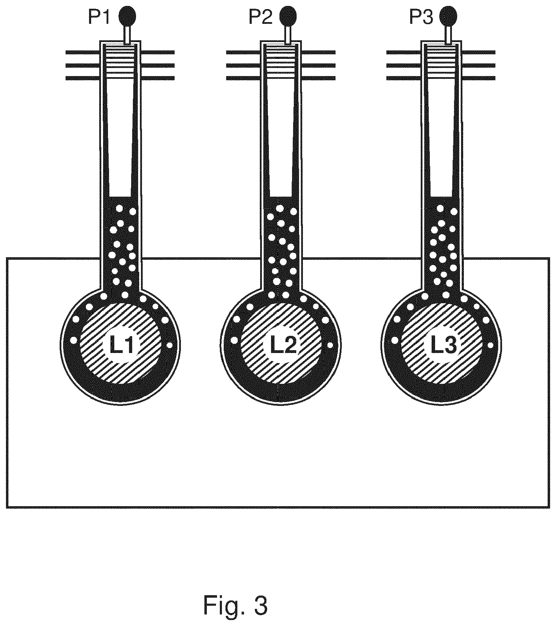

A schematic design is shown in Fig. 3. Each thermosyphon is equipped with a gas absolute pressure sensor (P1, P2, P3). The sensors are able to measure the pressure of the gas phase of the working fluid, but sensor can also be used to measure the pressure of the liquid phase. A protection and control relay (not shown), also termed a processing unit, collects pressure readings and generates an alarm, if one of two criteria is satisfied:

1. The absolute pressure reading from any of the manometers exceeds a predefined value $P_M$.
2. An absolute value of the pressure difference between any two manometers $\Delta P_{ij} = P_i - P_j$ (i,j = 1,2,3) exceeds a predefined value $\Delta P_M$.

If the heat loads do not exceed the nominal values, one can use only the differential criteria $\Delta P_{ij} \geq \Delta P_M$ for the pressure-based monitoring.

### Pressure based approach - two differential pressure sensors

If the heat loads do not exceed the nominal values, one can use only the differential criteria $\Delta P_{ij} \geq \Delta P_M$ for the pressure-based monitoring. As the absolute pressure is not monitored, one can use two differential manometers as illustrated in Fig. 3, which would measure $\Delta P_{12}$ and $\Delta P_{23}$ directly, in combination with a simpler relay to trigger an alarm.

### Temperature and pressure threshold values

It should be noted that specific values for $T_M$, $\Delta T_M$, $P_M$, and $\Delta P_M$ can be defined for specific implementations of switchgear compartments and thermosyphon designs, and in agreement with the corresponding standards and norms. The values mentioned above are just an example, and other values can be utilized.

### Application example

The performance of the monitoring system has been demonstrated by tests on a set of three thermosyphons designed for the circuit breaker compartment of a MV GIS. 3M™ Novec 649 Engineered Fluid (perfluroketone $C_6F_{12}O$) was used as the working fluid. Clamp-on temperature monitoring sensors of type Pt100 were attached to the tubes connecting the evaporator and the condenser. The fluid vapor pressure in each thermosyphon ($P_1$, $P_2$ and $P_3$) was measured by manometers installed at the top of the condensers. The evaporators were heated up to about 158 W per thermosyphon. The monitoring was done with the ABB protection and control relay REX640. Various typical thermosyphon failure modes were generated experimentally in the lab on the set of three thermosyphons. The test results demonstrated that all simulated failure modes would trigger alarm, both in case of the temperature-based and the pressure-based monitoring. For the tested system of three CBC thermosyphons and the ambient temperature of 25°C, the acceptable alarm level values are:

- Temperature-based monitoring: $T_M = 90°C$ and $\Delta T_M = 8$ K. In case the ambient temperature is as high as 40 °C, one should select $T_M = 105°C$.

- Pressure-based monitoring: $P_M = 3.5$ bar(a) and $\Delta P_M = 0.5$ bar.

The following provides details on how the new monitoring systems can detect faults in thermosyphons.

### Test Setup

The test setup consists of three thermosyphons designed for the circuit breaker compartment, one thermosyphon per phase L1, L2, L3. Clamp-on temperature monitoring sensors of type Pt100, denoted as T1, T2 and T3, were attached to the tubes connecting the evaporator and the condenser.

Thermocouples were also used to measure the temperature of the condensers (Tc1, Tc2 , and Tc3) and evaporators (Te1, Te2 , and Te3). The fluid vapor pressure in each thermosyphon (P1, P2 and P3) was measured by manometers installed at the top of the condensers. The evaporators were heated up to about 158 W per TS by cartridge heaters installed into cylindric holes drilled in the center of the aluminum pole parts. The cartridges with almost equal resistances were electrically connected in parallel.

### Monitoring system

Temperature readings from the Pt100 sensors were collected by a relay. The relay was programmed to calculate all 6 permutations of the temperature difference $\Delta T_{ij} = T_i - T_j$ (i,j = 1,2,3). The alarms were programmed to be activated as soon as either one of the sensor temperatures exceeded the limit $TM$, or any $\Delta T_{ij}$ exceeded the limit $\Delta TM$.

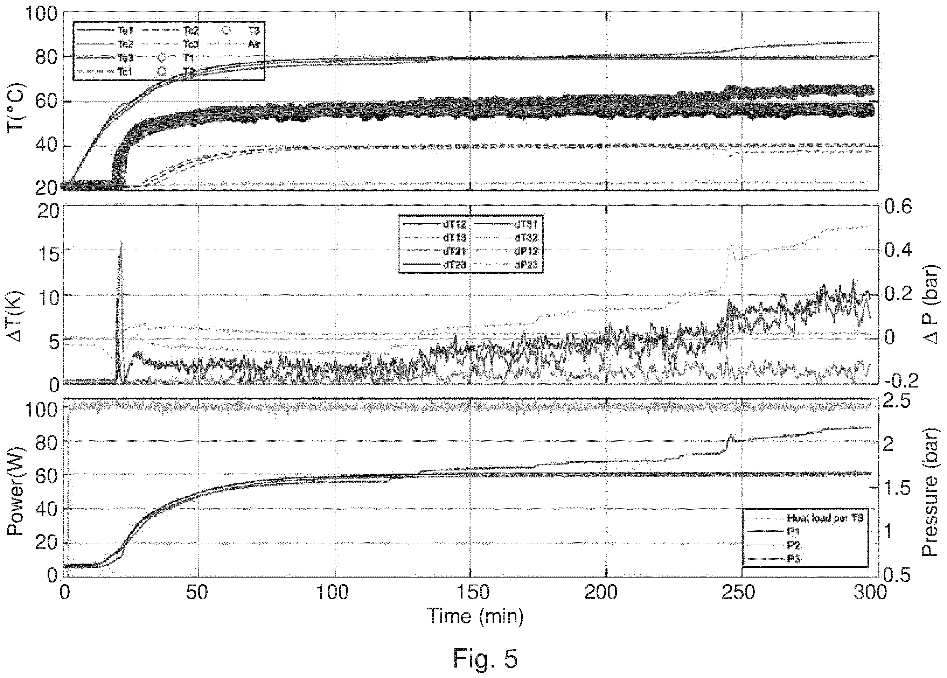

Fig. 5 shows the detection of a fault relating to an increase of the fluid pressure due to the non-condensable gas (NCG, mostly air) penetrating the thermosyphon, where in the situation of penetration of air or any other non-condensable gas (NCG) into a thermosyphon during operation, NCG would accumulate at the top of the condenser chamber. This failure mode was simulated by adding pressurized air through the charging valve of thermosyphon L1 during operation with the heat load of 100 W per thermosyphon (Fig. 5). The air was added stepwise starting at relative time t = 120 min.

The top graph of Fig. 5 shows temperature data, where the top curve is Te1, with Te2 and Te3 just below this curve, and where Te1 deviates upwards from Te2 and Te3 due to the air penetration. The middle three curves are T1, T2 and T3, where again T1 deviates upwards due to the air penetration. The bottom curves are Tc1, Tc2, and Tc3, where Tc 1 deviates downwards due to air penetration.

The middle graph of Fig. 5 shows differential temperature and differential pressure curves. Although 8 curves are labeled, only 5 curves are visible because dT12 is the same as dT21, dt13 is the same as dT31 and dT23 is the same as dT32. The generally flat curve at the bottom is dT32 and the generally flat curve in the middle is dP23. The top curve that rises is dP12, and the other two curves that rise are dT12 and dT13.

The bottom graph of Fig. 5 shows pressure data and heat load. The top flat curve is the heat load, and the curve that deviates upwards is P1, with P2 and P3 following each other.

By the end of the run, the pressure P1 inside TS L1 became higher by 0.5 bar compared to P2 and P3. The extra NCG leads to the rise of the boiling temperature, that is reflected in the increase of T1 readings. The increase of $\Delta T12$ and $\Delta T13$ exceed 10 K and would trigger an alarm, if the second-type alarm value is set to $\Delta TM = 10$ K.

It is to be noted that absolute temperature values, and absolute pressure values can be used to determine if there is a fault, where the other data shown for the other two heats pipes could be reference data. However, also by monitoring all three thermosyphons differential temperature and differential pressure data can be used to determine that this fault has occurred.

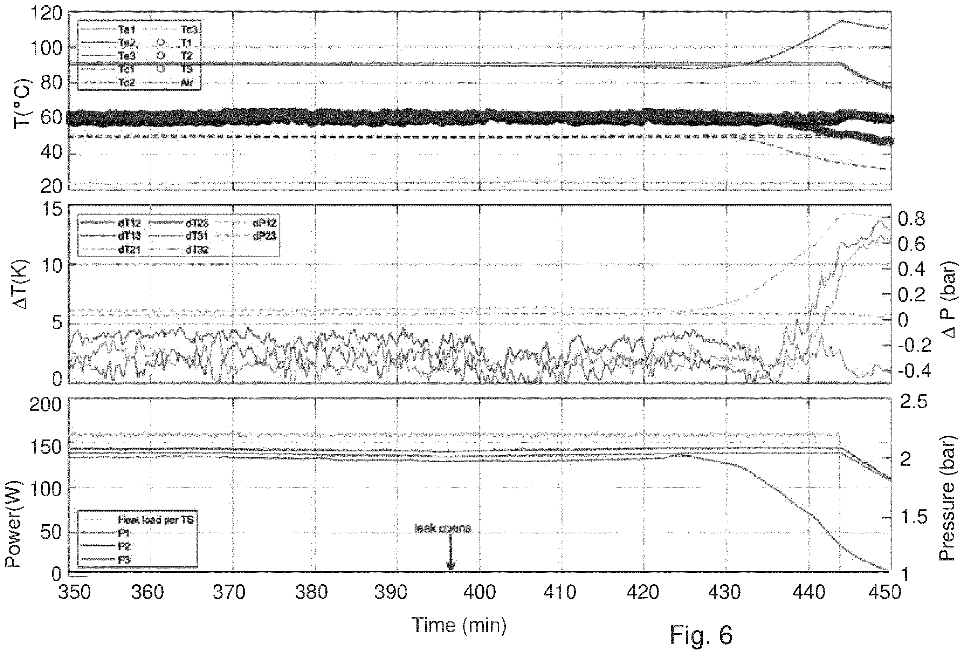

Fig 6 shows the detection of a fault relating to fluid escaping the thermosyphon slowly from the lower part of the thermosyphon (from the evaporator). This test simulates the failure mode of one thermosyphon developing a leak in the evaporator area. The fluid started to escape the evaporator at the relative time of t = 396 min (shown by the arrow in Fig. 6). When the boiling liquid level dropped down to the hole level at t > 420 min, the pressure P1 started decreasing and then the evaporator temperature Te1 started increasing while the monitoring sensor temperature T1 was decreasing. Power was turned off at about 450 minutes leading to a change in signal levels.

The top graph of Fig. 6 shows temperature data, where the top curve is Te1, with Te2 and Te3 just below this curve, and where Te1 deviates upwards from Te2 and Te3 due to the leak. The middle three curves are T1, T2 and T3, where T1 deviates downwards due to the leak. The bottom curves are Tc1, Tc2, and Tc3, where Tc 1 deviates downwards due to the leak.

The middle graph of Fig. 6 shows differential temperature and differential pressure curves. Although 8 curves are labeled, only 5 curves are visible because dT12 is the same as dT21, dT13 is the same as dT31 and dT23 is the same as dT32. The generally flat curve at the bottom is dT32 and the generally flat curve in the middle is dP23. The top curve that rises is dP12, and the other two curves that rise are dT12 and dT13.

The bottom graph of Fig. 6 shows pressure data and heat load. The top flat curve is the heat load, that fall at 450 minutes when the power is switched off. The curve that deviates downward is P1, with P2 and P3 following each other.

The increase of $\Delta T12$ and $\Delta T13$ exceed 10 K and the second-type alarm condition would be achieved.

It is to be noted that absolute temperature values, and absolute pressure values can be used to determine if there is a fault, where the other data shown for the other two heats pipes could be reference data. However, also by monitoring all three thermosyphons differential temperature and differential pressure data can be used to determine that this fault has occurred.

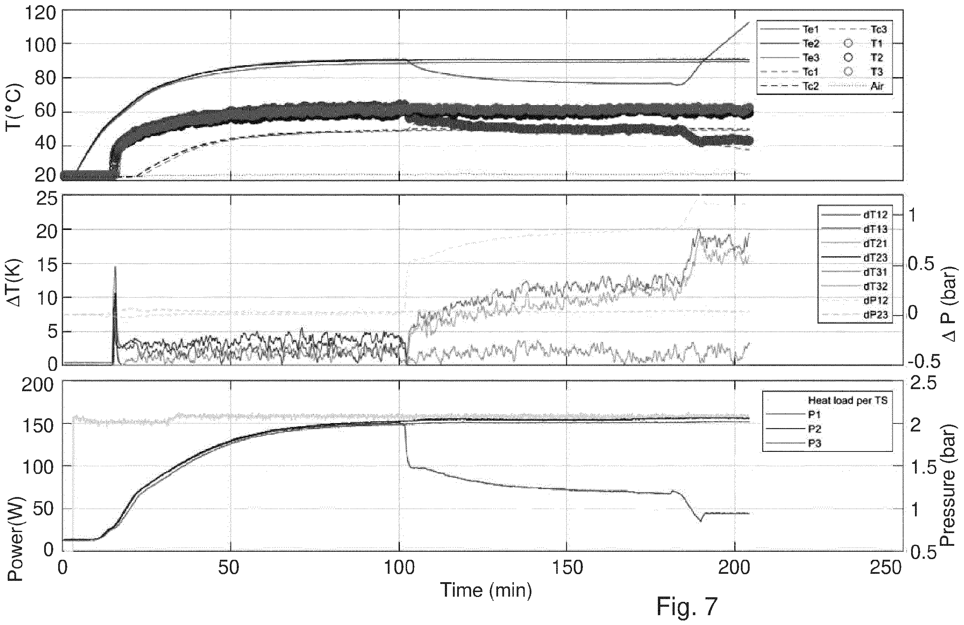

Fig 7 shows the detection of a fault relating to fluid with NCG escaping the thermosyphon from the upper part of the thermosyphon. The case, when a leak develops at the top of a thermosyphon, is different from the case of a leak at the bottom described above. Now NCG escapes the thermosyphon together with the working fluid. This failure was simulated by a small opening of the charging valve at the condenser top during steady operation. At relative time t = 100 min the charging valve of thermosyphon L1 was opened slightly. As a result of the leak at 100 minutes, pressure P1 and monitoring temperature T1 started decreasing. The cooling performance of TS L1 actually improved temporarily, until most of the fluid had escaped from thermosyphon L1 at t ~ 185 min.

The top graph of Fig. 7 shows temperature data, where the top curve that deviates downwards is Te1, with Te2 and Te3 continuing together, and where Te1 deviates downwards from Te2 and Te3 due to the leak. The middle three curves are T1, T2 and T3, where T1 deviates downwards due to the leak. The bottom curves are Tc1, Tc2, and Tc3, where Tc 1 deviates downwards due to the leak.

The middle graph of Fig. 7 shows differential temperature and differential pressure curves. Although 8 curves are labeled, only 5 curves are visible because dT12 is the same as dT21, dT13 is the same as dT31 and dT23 is the same as dT32. The generally flat curve at the bottom is dT32 and the generally flat curve in the middle is dP23. The top curve that rises is dP12, and the other two curves that rise are dT12 and dT13.

The bottom graph of Fig. 7 shows pressure data and heat load. The top flat curve is the heat load. The curve that deviates downward is P1, with P2 and P3 following each other.

The presence of the leak was accurately reflected in the rise of $\Delta T12$ and $\Delta T13$, therefore the second-type alarm would be triggered if the setting is $\Delta TM = 7\text{-}10$ K

It is to be noted that absolute temperature values, and absolute pressure values can be used to determine if there is a fault, where the other data shown for the other two heats pipes could be reference data. However, also by monitoring all three thermosyphons differential temperature and differential pressure data can be used to determine that this fault has occurred.

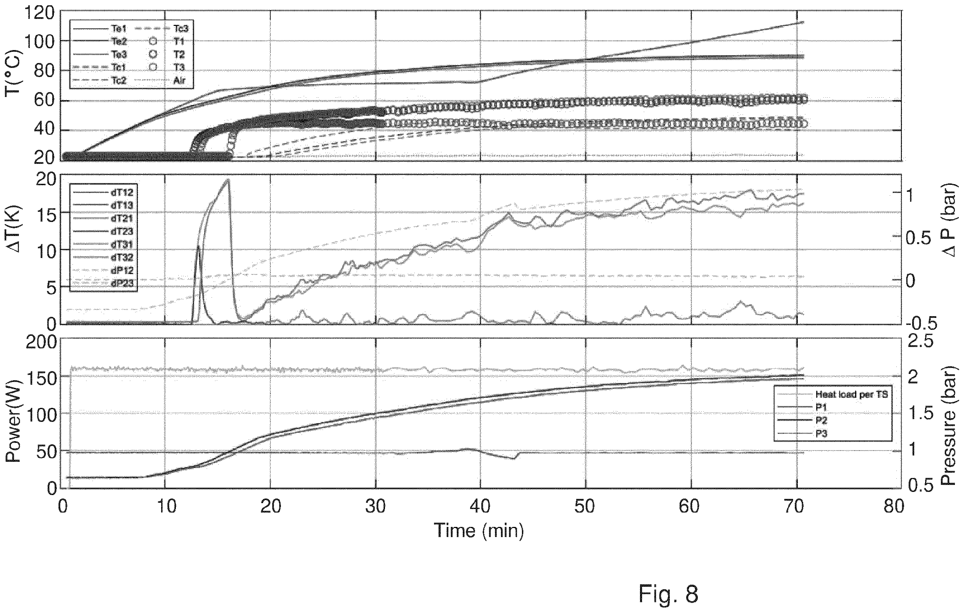

Fig 8 shows the detection of a fault relating to significant damage to a thermosyphon for example during transportation and commissioning, such that a thermosyphon connection is not completely tight. This failure mode was simulated by first fully opening the valve of TS L1 and then applying a heat load. Obviously, the pressure in the damaged thermosyphon L1 is equal to the ambient pressure, and the monitoring system can easily recognize this failure soon after the pressure in thermosyphons L2 and L3 becomes significantly higher than the ambient pressure, and also that $\Delta T12$ and $\Delta T13$ would exceed $\Delta TM$. The pressure difference $\Delta P12$ also increased due to the failure, to as much as $\Delta P12 = 1.0$ bar.

The top graph of Fig. 8 shows temperature data, where the top curve that deviates upwards is Te1, with Te2 and Te3 following each other and end up lower than Te1. The middle three curves are T1, T2 and T3, where T1 is the lowest curve. The bottom curves are Tc1, Tc2, and Tc3, where Tc1 starts with the higher temperature and ends with the lowest temperature.

The middle graph of Fig. 8 shows differential temperature and differential pressure curves. Although 8 curves are labeled, only 5 curves are visible because dT12 is the same as dT21, dT13 is the same as dT31 and dT23 is the same as dT32. The generally flat curve at the bottom is dT32 and the generally flat curve in the middle is dP23. The top curve is dP12, and the other two curves that rise are dT12 and dT13.

The bottom graph of Fig. 8 shows pressure data and heat load. The top flat curve is the heat load. The curve that is relatively constant is P1, with P2 and P3 following each other and rising gradually to a plateau.

It is to be noted that absolute temperature values, and absolute pressure values can be used to determine if there is a fault, where the other data shown for the other two heats pipes could be reference data. However, also by monitoring all three thermosyphons differential temperature and differential pressure data can be used to determine that this fault has occurred.

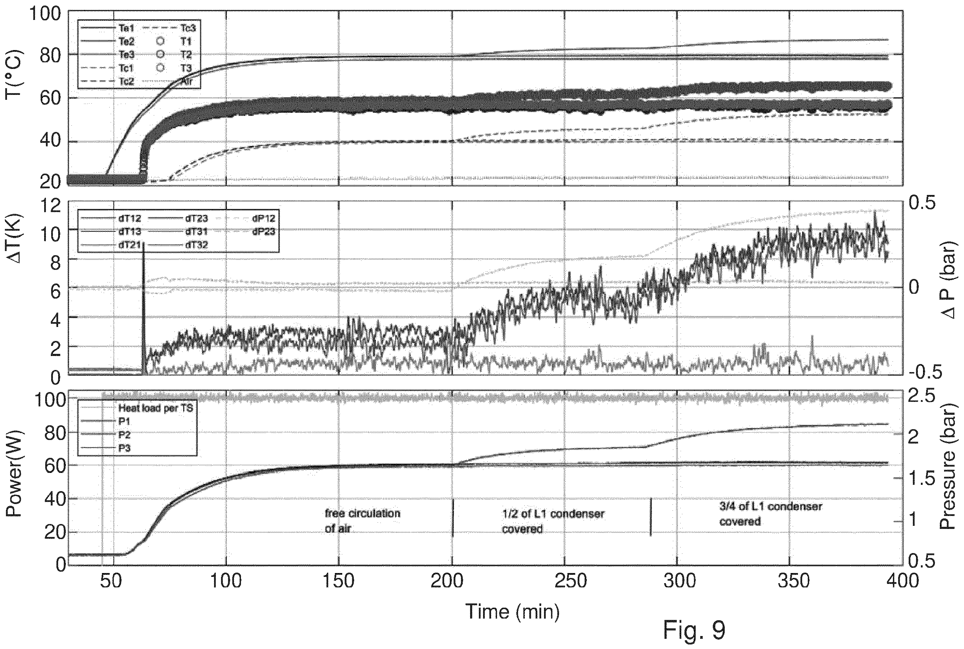

Fig 9 shows the detection of a fault relating to a reduction in convection cooling of a thermosyphon condenser, for example if a heat sink at the condenser become partially blocked. The heat sink at the condenser was partially blocked at time 200 minutes and then further blocked at time 275 minutes. With blockage, and indeed with increased blockage, of the surface of heat sink of condenser L1, the temperature and the pressure of the fluid in L1 increases. This is accurately reflected in the readings of T1 monitoring sensor as well as in $\Delta T12$ and $\Delta T13$ values. The pressure difference $\Delta P12$ also increased due to the failure and exceeded $\Delta P12 > 0.4$ bar

The top graph of Fig. 9 shows temperature data, where the top curve is Te1, with Te2 and Te3 just below this curve, and where Te1 deviates upwards from Te2 and Te3 due to the reduction in convection cooling. The middle three curves are T1, T2 and T3, where T1 deviates upwards due to the reduction in convection cooling. The bottom curves are Tc1, Tc2, and Tc3, where Tc 1 deviates upwards due to the reduction in convection cooling.

The middle graph of Fig. 9 shows differential temperature and differential pressure curves. Although 8 curves are labeled, only 5 curves are visible because dT12 is the same as dT21, dT13 is the same as dT31 and dT23 is the same as dT32. The generally flat curve at the bottom is dT32 and the generally flat curve in the middle is dP23. The top curve that rises is dP12, and the other two curves that rise are dT12 and dT13.

The bottom graph of Fig. 9 shows pressure data and heat load. The top flat curve is the heat load. The curve that deviates upwards is P1, with P2 and P3 following each other.

The increase of $\Delta T12$ and $\Delta T13$ exceed 10 K and the second-type alarm condition would be achieved.

It is to be noted that absolute temperature values, and absolute pressure values can be used to determine if there is a fault, where the other data shown for the other two heats pipes could be reference data. However, also by monitoring all three thermosyphons differential temperature and differential pressure data can be used to determine that this fault has occurred.

Thus, it has been established that the new technique or monitoring one or more thermosyphons of a medium voltage switchgear can detect a number of different faults that can occur for a thermosyphon.

In another exemplary embodiment, a computer program or computer program element is provided that is characterized by being configured to execute the method steps of any of the methods according to one of the preceding embodiments, on an appropriate apparatus or system.

The computer program element might therefore be stored on a computer unit, which might also be part of an embodiment. This computing unit may be configured to perform or induce performing of the steps of the method described above. Moreover, it may be configured to operate the components of the above-described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items recited in the claims. The mere fact that certain measures are re-cited in mutually different dependent claims does not indicate that a combination of these measures cannot be used to advantage. Any reference signs in the claims should not be construed as limiting the scope.

**Claims**

1. A system for monitoring a thermosyphon of a medium voltage switchgear, the thermosyphon comprising an evaporator section (4) an adiabatic section (5) a condenser section (6), wherein the evaporator section is in thermal contact with a conductor (L1, L2, L3, 3) of the switchgear, wherein the adiabatic section links the evaporator section to the condenser section and wherein in use at least some of a working fluid in the thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the system for monitoring the thermosyphon comprises:

    - at least one sensor (T1, T2, T3, P1, P2, P3); and
    - a processing unit;

        wherein the at least one sensor is configured to measure temperature data and/or pressure data of the working fluid;
        wherein the at least one sensor is configured to provide the temperature data and/or the pressure data to the processing unit; and
        wherein the processing unit is configured to determine that the thermosyphon has a fault based on analysis of the temperature data and/or the pressure data.

2. System according to claim 1, wherein the determination that the thermosyphon has a fault comprises a comparison of the temperature data with at least one reference temperature and/or a comparison of the pressure data with at least one reference pressure.

3. System according to claim 2, wherein the determination that the thermosyphon has a fault comprises a determination that the temperature data is different to the at least one reference temperature by a threshold temperature and/or a determination that the pressure data is different to the at least one reference pressure by a threshold pressure.

4. A system for monitoring three thermosyphons of a medium voltage switchgear, each thermosyphon comprising an evaporator section (4) an adiabatic section (5) a condenser section (6), wherein each evaporator section is in thermal contact with a different one or three conductors (L1, L2, L3, 3) of the switchgear, wherein the adiabatic section of each thermosyphon links the evaporator section of each thermosyphon to the condenser section of each thermosyphon and wherein in use at least some of a working fluid in each thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the system for monitoring the three thermosyphons comprises:

    - a plurality of sensors (T1, T2, T3, P1, P2, P3); and
    - a processing unit;

        wherein at least one first sensor (T1, P1) of the plurality sensors is configured to measure first temperature data and/or first pressure data of the working fluid in a first thermosyphon of the three thermosyphons; wherein at least one second sensor (T2, P2) of the plurality sensors is configured to measure second temperature data and/or second pressure data of the working fluid in a second thermosyphon of the three thermosyphons; wherein at least one third sensor (T3, P3) of the plurality sensors is configured to measure third temperature data and/or third pressure data of the working fluid in a third thermosyphon of the three thermosyphons; wherein the at least one first sensor is configured to provide the first temperature data and/or the first pressure data to the processing unit; wherein the at least one second sensor is configured to provide the second temperature data and/or the second pressure data to the processing unit; wherein the at least one third sensor is configured to provide the third temperature data and/or the third pressure data to the processing unit; and wherein the processing unit is configured to determine that the first thermosyphon, the second thermosyphon or the third thermosyphon has a fault based on analysis of the first temperature data and/or the first pressure data and/or the second temperature data and/or the second pressure data and/or the second pressure data and/or the third temperature data and/or the third pressure data.

5. System according to claim 4, wherein the determination that the first thermosyphon has a fault comprises a comparison of the first temperature data with at least one reference temperature and/or a comparison of the first pressure data with at least one reference pressure.

6. System according to any of claims 4-5, wherein the determination that the second thermosyphon has a fault comprises a comparison of the second temperature data with at least one reference temperature and/or a comparison of the second pressure data with at least one reference pressure.

7. System according to any of claims 4-6, wherein the determination that the third thermosyphon has a fault comprises a comparison of the third temperature data with at least one reference temperature and/or a comparison of the third pressure data with at least one reference pressure.

8. System according to any of claims 4-7, wherein the determination that the first thermosyphon has a fault comprises a comparison of the first temperature data with the second temperature data and/or a comparison of the first pressure data with the second pressure data.

9. System according to claim 8, wherein the determination that the first thermosyphon has a fault comprises a comparison of the first temperature data with the third temperature data and/or a comparison of the first pressure data with the third pressure data.

10. System according to any of claims 4-9, wherein the determination that the second thermosyphon has a fault comprises a comparison of the second temperature data with the first temperature data and/or a comparison of the second pressure data with the first pressure data.

11. System according to claim 10, wherein the determination that the second thermosyphon has a fault comprises a comparison of the second temperature data with the third temperature data and/or a comparison of the second pressure data with the third pressure data.

12. A system for monitoring three thermosyphons of a medium voltage switchgear, each thermosyphon comprising an evaporator section (4) an adiabatic section (5) a condenser section (6), wherein each evaporator section is in thermal contact with a different one or three conductors (L1, L2, L3, 3) of the switchgear, wherein the adiabatic section of each thermosyphon links the evaporator section of each thermosyphon to the condenser section of each thermosyphon and wherein in use at least some of a working fluid in each thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the system for monitoring the three thermosyphons comprises:

    - a first differential pressure sensor (ΔP12);
    - a second differential pressure sensor (ΔP23); and
    - a processing unit;

      wherein the first differential pressure sensor (ΔP12) is configured to measure first differential pressure data between a pressure of the working fluid in a first thermosyphon of the three thermosyphons and a pressure of the working fluid in a second thermosyphon of the three thermosyphons;

wherein the second differential pressure sensor ($\Delta$P23) is configured to measure second differential pressure data between the pressure of the working fluid in the second thermosyphon of the three thermosyphons and a pressure of the working fluid in a third thermosyphon of the three thermosyphons;

wherein the first differential pressure sensor is configured to provide the first differential pressure data to the processing unit;

wherein the second differential pressure sensor is configured to provide the second differential pressure data to the processing unit; and

wherein the processing unit is configured to determine that the first thermosyphon, the second thermosyphon or the third thermosyphon has a fault based on analysis of the first differential pressure data and the second differential pressure data.

13. A switchgear comprising the system of any of claims 1-3, or the system of any of claims 4-11, or the system of claim 12.

14. A method for monitoring a thermosyphon of a medium voltage switchgear, the thermosyphon comprising an evaporator section (4), an adiabatic section (5), a condenser section (6), wherein the evaporator section is in thermal contact with a conductor (L1, L2, L3, 3) of the switchgear, wherein the adiabatic section links the evaporator section to the condenser section and wherein in use at least some of a working fluid in the thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the method for monitoring the thermosyphon comprises:

measuring with at least one sensor (T1, T2, T3, P1, P2, P3) temperature data and/or pressure data of the working fluid;

providing the temperature data and/or the pressure data to a processing unit; and

determining by the processing unit that the thermosyphon has a fault based on analysis of the temperature data and/or the pressure data.

15. A method for monitoring three thermosyphons of a medium voltage switchgear, each thermosyphon comprising an evaporator section (4) an adiabatic section (5) a condenser section (6), wherein each evaporator section is in thermal contact with a different one or three conductors (L1, L2, L3, 3) of the switchgear, wherein the adiabatic section of each thermosyphon links the evaporator section of each thermosyphon to the condenser section of each thermosyphon and wherein in use at least some of a working fluid in each thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the method for monitoring the three thermosyphons comprises:

measuring by at least one first sensor (T1, P1) of a plurality sensors (T1, T2, T3, P1, P2, P3) first temperature data and/or first pressure data of the working fluid in a first thermosyphon of the three thermosyphons;

measuring by at least one second sensor (T2, P2) of the plurality sensors second temperature data and/or second pressure data of the working fluid in a second thermosyphon of the three thermosyphons;

measuring by at least one third sensor (T3, P3) of the plurality sensors third temperature data and/or third pressure data of the working fluid in a third thermosyphon of the three thermosyphons;

providing the first temperature data and/or the first pressure data to a processing unit;

providing the second temperature data and/or the second pressure data to the processing unit;

providing the third temperature data and/or the third pressure data to the processing unit; and

determining by the processing unit is configured to determine that the first thermosyphon, the second thermosyphon or the third thermosyphon has a fault based on analyzing the first temperature data and/or the first pressure data and/or the second temperature data and/or the second pressure data and/or the second pressure data and/or the third temperature data and/or the third pressure data.

16. A method for monitoring three thermosyphons of a medium voltage switchgear, each thermosyphon comprising an evaporator section (4) an adiabatic section (5) a condenser section (6), wherein each evaporator section is in thermal contact with a different one or three conductors (L1, L2, L3, 3) of the switchgear, wherein the adiabatic section of each thermosyphon links the evaporator section of each thermosyphon to the condenser section of each thermosyphon and wherein in use at least some of a working fluid in each thermosyphon is evaporated to a vapor phase (7b) in the evaporator section and flows via the adiabatic section to the condenser section and is condensed in the condenser section to a liquid phase (7a) and returns via the adiabatic section to the evaporator section, and wherein the method for monitoring the three thermosyphons comprises:

measuring by a first differential pressure sensor (ΔP12) first differential pressure data between a pressure of the working fluid in a first thermosyphon of the three thermosyphons and a pressure of the working fluid in a second thermosyphon of the three thermosyphons;

measuring by a second differential pressure sensor (ΔP232) second differential pressure data between the pressure of the working fluid in the second thermosyphon of the three thermosyphons and a pressure of the working fluid in a third thermosyphon of the three thermosyphons

providing the first differential pressure data to a processing unit;

providing the second differential pressure data to the processing unit; and

determining by the processing unit that the first thermosyphon, the second thermosyphon or the third thermosyphon has a fault based on analysis of the first differential pressure data and the second differential pressure data.

17. A computer program element for controlling a system according to any of claims 1-3 which when executed by a processor is configured to carry out the method of claim 14, or for controlling a system according to any of claims 4-11 which when executed by a processor is configured to carry out the method of claim 15, or for controlling a system according to claim 12 which when executed by a processor is configured to carry out the method of claim 16.

Fig. 1

Fig. 2

Fig. 3

Fig. 4

Fig. 5

EP 4 404 402 A1

Fig. 6

Fig. 7

Fig. 8

Fig. 9

EP 4 404 402 A1

Europäisches
Patentamt

European
Patent Office

Office européen
des brevets

# EUROPEAN SEARCH REPORT

**Application Number**

EP 23 15 1971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 771 114 B2 (ABB RESEARCH LTD [CH]) 10 August 2010 (2010-08-10) | 1-7, 13-15,17 | INV. H02B13/065 |
| Y | * column 5, line 39 - column 9, line 19; figures * | 8-12,16 | F28D15/02 G01K3/06 |
| | ----- | | H02G5/10 |
| Y | EP 3 171 469 A1 (ABB SCHWEIZ AG [CH]) 24 May 2017 (2017-05-24) * paragraph [0002] - paragraph [0006]; claims 1, 2; figures 1, 2 * | 8-12,16 | G01K3/14 |
| | ----- | | |
| A | EP 1 667 300 A1 (ABB RESEARCH LTD [CH]) 7 June 2006 (2006-06-07) * claims 1, 9; figures 1, 2 * | 4,12 | |
| | ----- | | |
| A | EP 4 084 244 A1 (ABB SCHWEIZ AG [CH]) 2 November 2022 (2022-11-02) * paragraph [0034] - paragraph [0035]; figures 1-5 * | 1,4,12 | |
| | ----- | | |

**TECHNICAL FIELDS SEARCHED (IPC)**

H02B
G01W
F28F
F28D
G01K
H02G
H05K
H01H

The present search report has been drawn up for all claims

| Place of search | Date of completion of the search | Examiner |
|---|---|---|
| The Hague | 23 June 2023 | Starck, Thierry |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

## ANNEX TO THE EUROPEAN SEARCH REPORT
## ON EUROPEAN PATENT APPLICATION NO.

**EP 23 15 1971**

This annex lists the patent family members relating to the patent documents cited in the above-mentioned European search report.
The members are as contained in the European Patent Office EDP file on
The European Patent Office is in no way liable for these particulars which are merely given for the purpose of information.

**23‑06‑2023**

| Patent document cited in search report | | Publication date | Patent family member(s) | | Publication date |
|---|---|---|---|---|---|
| US 7771114 | B2 | 10‑08‑2010 | AT | 403228 T | 15‑08‑2008 |
| | | | CN | 101248500 A | 20‑08‑2008 |
| | | | EP | 1737009 A1 | 27‑12‑2006 |
| | | | EP | 1894217 A1 | 05‑03‑2008 |
| | | | JP | 4847522 B2 | 28‑12‑2011 |
| | | | JP | 2008544738 A | 04‑12‑2008 |
| | | | US | 2008115924 A1 | 22‑05‑2008 |
| | | | WO | 2006136044 A1 | 28‑12‑2006 |
| EP 3171469 | A1 | 24‑05‑2017 | CN | 106918778 A | 04‑07‑2017 |
| | | | EP | 3171469 A1 | 24‑05‑2017 |
| | | | US | 2017146471 A1 | 25‑05‑2017 |
| | | | US | 2017148300 A1 | 25‑05‑2017 |
| EP 1667300 | A1 | 07‑06‑2006 | CN | 1783608 A | 07‑06‑2006 |
| | | | EP | 1667300 A1 | 07‑06‑2006 |
| | | | JP | 4833643 B2 | 07‑12‑2011 |
| | | | JP | 2006166697 A | 22‑06‑2006 |
| | | | US | 2006120024 A1 | 08‑06‑2006 |
| EP 4084244 | A1 | 02‑11‑2022 | EP | 4084244 A1 | 02‑11‑2022 |
| | | | WO | 2022228767 A1 | 03‑11‑2022 |

EPO FORM P0459

For more details about this annex : see Official Journal of the European Patent Office, No. 12/82